# Europäisches Patentamt
# European Patent Office
# Office européen des brevets

(19)

(11) Veröffentlichungsnummer: **0 069 161**
**B1**

(12) ## EUROPÄISCHE PATENTSCHRIFT

(45) Veröffentlichungstag der Patentschrift:
**26.02.86**

(51) Int. Cl.⁴: **A 01 F 12/30**

(21) Anmeldenummer: **81105213.3**

(22) Anmeldetag: **04.07.81**

(54) **Schüttlerwelle.**

(43) Veröffentlichungstag der Anmeldung:
**12.01.83 Patentblatt 83/2**

(45) Bekanntmachung des Hinweises auf die Patenterteilung:
**26.02.86 Patentblatt 86/9**

(84) Benannte Vertragsstaaten:
**AT BE CH DE FR GB IT LI NL SE**

(56) Entgegenhaltungen:
**EP - A - 0 041 207**
**DE - C - 439 562**
**DE - C - 510 378**
**DE - C - 1 148 099**
**US - A - 3 836 103**

(73) Patentinhaber: **DEERE & COMPANY, 1 John Deere Road, Moline Illinois 61265 (US)**

(72) Erfinder: **Schuhmacher, Ernst, Donaustrasse 4, D-6650 Homburg-Einöd (DE)**

(74) Vertreter: **Sartorius, Peter et al, DEERE & COMPANY European Office, Patent Department Postfach 503 Steubenstrasse 36-42, D-6800 Mannheim 1 (DE)**

LIBER, STOCKHOLM 1986

## Beschreibung

Die Erfindung bezieht sich auf eine Schüttlerwelle für mehrere nebeneinander angeordnete Schüttler von Mähdreschern, die an mindestens drei Stellen von Lagern drehbar aufgenommen ist, wobei das mittlere Lager im schräg verlaufenden Schättlerwellenabschnitt angeordnet ist.

Es ist bereits eine Schüttlerwelle für eine Dreschmaschine bekannt, die an ihren äußeren Enden in Lagern drehbar aufgenommen ist (DE—C—439 562). Auf der Längsmittelebene der Dreschmaschine befindet sich ein weiteres Lager, das zur zusätzlichen Abstützung der Schüttlerwelle dient. Das Lager ist hierzu als Lagerbuchse ausgebildet und auf den horizontal verlaufenden Schüttlerwellenteil aufgezogen. Die Buchse, die als geteilte Lagerbuchse ausgebildet ist, wird von einer Tragvorrichtung, die mit dem Rahmen des Mähdreschers verbunden ist, getragen. Durch die Verwendung eines derartigen Lagers wird relativ viel Platz zwischen den einzelnen Schüttlern verwendet, so daß derartige Lager sehr platzaufwendig sind, zumal im Bereich der Lagerstelle des mittleren Lagers ein Schüttler vorgesehen werden kann.

Ferner ist ein Wälzlager bekannt (DE—C—510 378), das im schräg verlaufenden Kurbelwellenabschnitt angeordnet ist, der kierzu mit einer Flanschandrehung versehen ist, um das Wälzlager entsprechend aufnehmen zu können. Die besondere Ausbildung des schräg verlaufenden Teils der Kurbelwelle führt zu einer wesentlichen Verteuerung der Kurbelwelle und zum anderen zur Schwächung dieses Kurbelwellenabschnittes, so daß dieser sehr stark ausgelegt werden muß.

Demgegenüber liegt der Erfindung die Aufgabe zugrunde, das mittlere lager zur zusätzlichen Abstützung der Schüttlerwelle eines Mähdreschers derart platzsparend auszubilden und anzuordnen, daß mit wenigen Mitteln eine einwandfreie zusätzliche Abstützung der Schüttlerwelle möglich ist, ohne daß am Querschnitt der Schüttlerwelle Veränderungen notwendig sind. Diese Aufgabe ist dadurch gelöst worden, daß das mittlere Lager aus einer auf den schräg verlaufenden Schüttlerwellenabschnitt aufschieb- und mit diesem fest verbindbaren, eine längliche Öffnung aufweisenden Lagerscheibe besteht, die auf äußeren Lagerringen von Wälzlagern abstützbar ist, die in vertikaler Richtung verstellbar angeordnet sind. Durch die vorteilhafte Lagerscheibe ist es möglich, diese ohne weiteres auf den schräg verlaufenden Teil des Kurbelwellenabschnittes aufzuschieben und mit diesem zu verbinden, so daß am Querschnitt des schräg verlaufenden Teils der Kurbelwelle keine Veränderungen vorgenommen zu werden brauchen. Da die Lagerscheibe sich auf den Wälzlagern abstützt, kann diese relativ schmal ausgebildet werden, so daß sie ohne weiteres bei allen Mähdreschern zwischen zwei Hordenschüttlern vorgesehen werden kann. Somit ist es auch nicht erforderlich, den Zwischenraum zwischen zwei nebeneinander liegenden Hordenschüttlern zur Aufnahme der Lagerscheibe zu verändern, so daß auch ein nachträglicher Einbau oder Austausch der Kurbelwelle gegen herkömmliche Kurbelwellen möglich ist, die bisher wesentlich stärker dimensioniert werden mußten als die erfindungsgemäße Kurbelwelle. Durch die Verstellmöglichkeit der Lager in vertikaler Richtung ist eine optimale Anpassung der Lager an die Lagerscheibe möglich, so daß die sonst üblich auftretenden Schwingungen der Kurbelwelle reduziert werden können. Ferner ist es vorteilhaft, daß die Lagerrolle an einer Halterung angeordnet ist, die vertikal schwenkbar gelagert ist. Durch die vorteilhafte Ausbildung der Lagerscheibe kann diese ohne weiteres mit dem schräg verlaufenden Teil des Schüttlerwellenabschnittes fest verbunden, beispielsweise verschweißt werden, ohne daß hierzu an dem schräg verlaufenden Teil eine Abänderung vorgenommen zu werden braucht. Somit ist es möglich, auch herkömmliche Schüttlerwellen ohne weiteres über drei Lager abzustützen. Um die Reibungswiderstände klein zu halten, ist es dabei vorteilhaft, daß in der Halterung zwei oder mehrere Wälzlager angeordnet sind.

In weiterer Ausgestaltung der Erfindung ist es vorteilhaft, daß die Halterung über einen Gelenkbolzen an mindestens einen Tragarm schwenkbar angeschlossen ist. Vorteilhaft ist es ferner, daß die Halterung oder der Tragarm in vertikaler und horizontaler Ebene verstellbar angeordnet ist. Somit kann eine einwandfreie Justierung der Halterung bzw. des Tragarmes vorgenommen werden. Hierzu ist es ferner vorteilhaft, daß die Lagerscheibe koaxial zur geometrischen Mittellinie der Schüttlerwelle angeordnet ist.

Anhand der Zeichnung wird ein Ausführungsbeispiel einer Schüttlerwelle für mehrere nebeneinander angeordnete Schüttler nach der Erfindung erläutert.

Es zeigt:

Fig. 1 eine Schüttlerwelle, die in Seitenwänden eines Mähdreschers und einem zusätzlichen mittleren Lager aufgenommen ist.

Fig. 2 eine Seitenansicht der Anordnung des mittleren Lagers zur zusätzlichen Abstützung der Schüttlerwelle, im Schnitt entlang der Linie 1—1 gemäß Fig. 1;

Fig. 3 eine Teilansicht des mittleren Lagers im Schnitt.

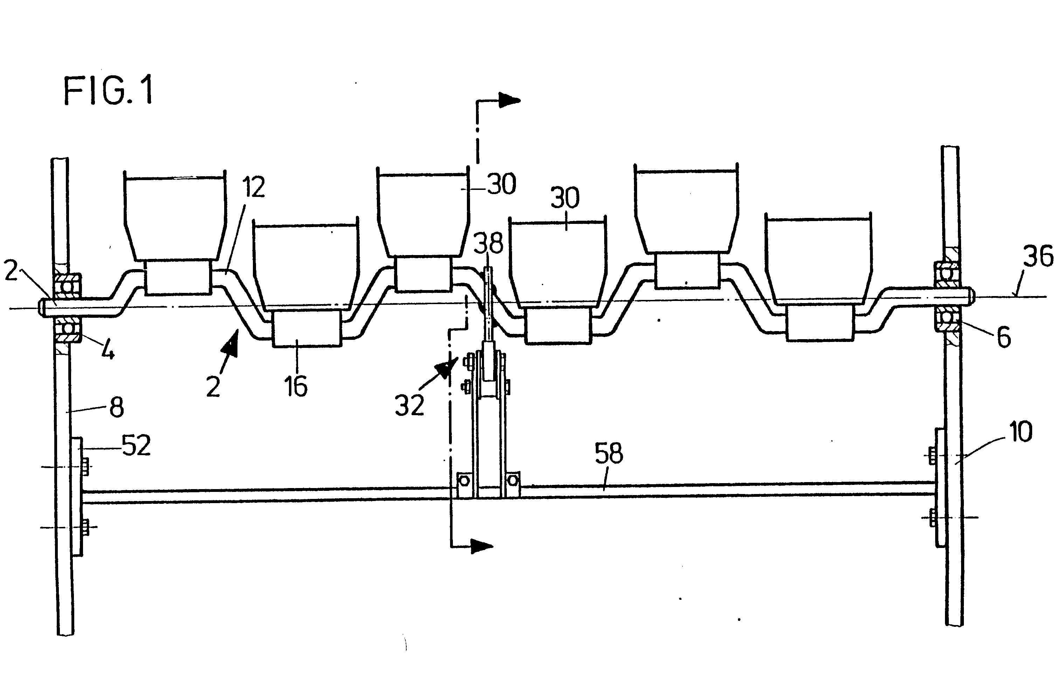

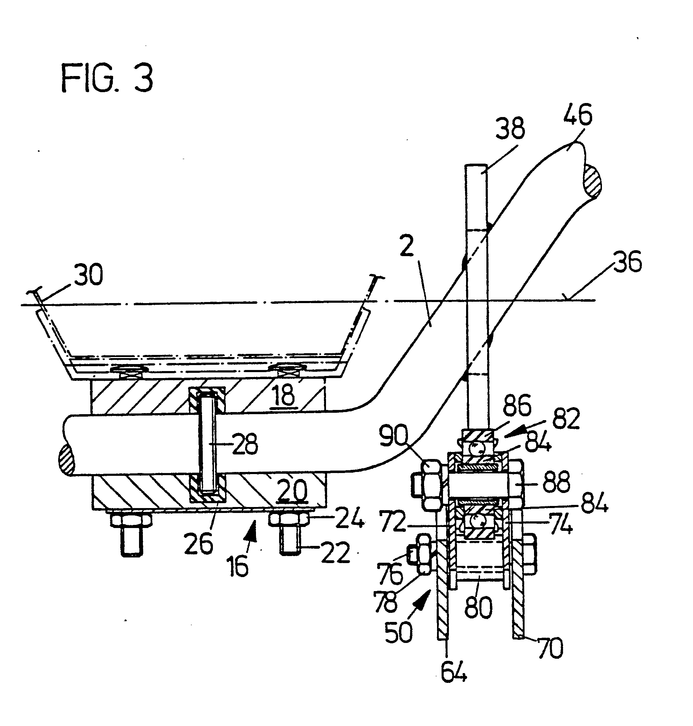

In der Zeichnung ist mit 2 eine Schüttlerwelle bezeichnet, die in zwei mit Abstand zueinander angeordneten äußeren Lagern 4 und 6 drehbar aufgenommen ist, die beispielsweise in einer linken Geitenwand 8 und einer rechten Seitenwand 10 eines in der Zeichnung nicht weiter dargestellten Mähdreschers angeordnet sind. Die in Fig. 1 dargestellten Lager 4 und 6 können jedoch auch als Gleitlager beispielsweise auch als Holzgleitlager oder als Wälzlager ausgebildet sein. Die Schüttlerwelle 2 ist über in der Zeichnung nicht dargestellte Sicherungsringe gegen axiales Verstellen gesichert. Die Schüttlerwelle 2 ist mit zahlreichen mit Bezug auf die Standfläche des Mähdreschers horizontalverlaufenden Schüttlerwellenabschnitten 12 versehen, die zur Aufnahme von Gleitlagern 16 dienen. Die Gleitlager 16, die im Ausführungsbeispiel gemäß Fig. 3 als Holzlager ausgebildet sein können, bestehen aus jeweils einer oberen Lagerschale 18 und einer unteren lagerschale 20, die mittels Schraubenbolzen 22 und Muttern 24 auf der Schüttlerwelle 2 gesichert sind. Das Gleitlager 16 ist im mittleren Bereich mit einer Ringnut 26 ausgerüstet, die zur Aufnahme einer mit der Schüttlerwelle 2 fest verbundenen Arretierungsschiebe 28 dient. Auf diese Weise wird eine Axialverstellung der Schüttler auf der Schüttlerwelle 2 vermieden. Die Ringnut 26 bzw. die Lagerschalen 18, 20 lassen sich über einen in der Zeichnung nicht dargestellten Schmiernippel oder vor Anbau der beiden Lagerschalen 18 und 20 mit Fett füllen, so daß eine einwandfreie Schmierung der Schüttlerwelle während des Arbeitseinsatzes gewährleistet, ist. Die obere Lagerschale 18 des Gleitlagers 16 dient zum Anschluß eines entsprechenden, in gestrichelten Linien angedeuteten Schüttlers 30. Die einzelnen Schraubenbolzen 22 können dabei gleichzeitig auch als Anschlußbolzen für den Schüttler 30 dienen.

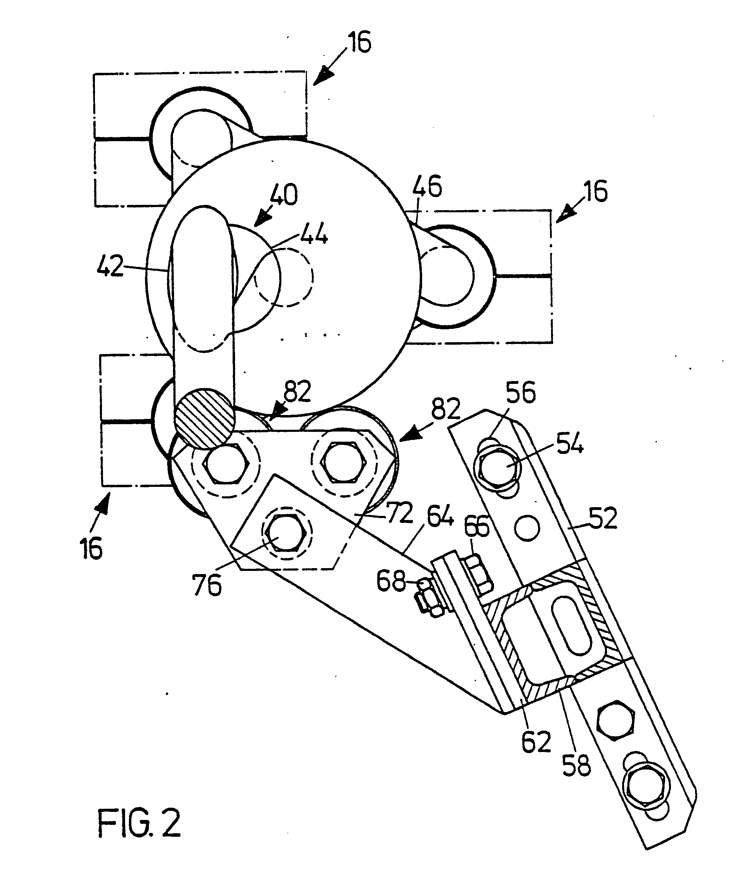

Zwischen den beiden mittleren Schüttlern 30 befindet sich ein zusätzliches Lager 32 zur Abstützung der Schüttlerwelle 2. Das Lager 32 besteht hierzu aus einer kreisrunden Lagerscheibe 38, die mit Bezug auf die geometrische Mittellinie 36, die gleichzeitig Drehachse der Schüttlerwelle 2 ist, koaxial angeordnet ist. Die Lagerscheibe 38 ist, wie aus Fig. 2 hervorgeht, mit einer Durchdringung 40 versehen, die aus einem in etwa ovalförmig ausgebildeten Längsschlitz 42 mit sich daran anschließender halbkreisförmiger Öffnung 44 gebildet ist.

Die Schüttlerwelle 2 weist mehrere schrägverlaufende Schüttlerwellenabschnitte 46 auf, die jeweils um einen gewissen Winkelgrad gegenüber dem nachfolgenden schrägverlaufenden Schüttlerwellenabschnitt 46 versetzt sind (Fig. 2). Durch die vorteilhafte Ausgestaltung der Durchdringung 40 ist es möglich, die Arretierungsscheibe 28 ohne weiteres durch die Durchdringung durchzustecken, so daß die Arretierungsscheiben 28 bei der Montage auf der Schüttlerwelle 2 verbleiben können. Die Lagerscheibe 38 ist mit dem schrägverlaufenden Teil des Schüttlerwellenabschnittes 46 fest verschweißt.

Unterhalb der Lagerscheibe 38 befindet sich eine Vorrichtung 50 zur Abstützung des mittleren Schüttlerwellenabschnittes 46. Die Vorrichtung 50 besteht aus zwei geneigtverlaufenden winkelförmig ausgebildeten Halterungen 52, die jeweils mit der Innenseite der Seitenwand 8 bzw. 10 des Mähdreschers über Schraubenbolzen 54 lösbar verbunden sind. Die Halterung 52 weist hierzu Längsschlitze 56 auf, durch die sich die Schraubenbolzen 54 erstrecken. Bevor die Schraubenbolzen 54 festgezogen werden, läßt sich die Halterung 52 nach oben bzw. nach unten verschieben.

An der Halterung 52 greift ein sich über die gesamte Breite des Gehäuses des Mähdreschers erstreckender Querträger 58 an, der mit den beiden außenliegenden Halterungen 52 verschraubt, beispielsweise auch verschweißt sein kann. Der Quertrüger 58 dient zur Aufnahme einer Lagerplatte 62, an die ein nach vorne geneigtverlaufender Tragarm 64 mittels Schraubenbolzen 66 und Muttern 68 lösbar angeschlossen ist. Wie aus Fig. 3 hervorgeht, ist neben dem Tragarm 64 ein weiterer Tragarm 70 vorgesehen, der ebenfalls über in der Zeichnung nicht dargestellte Schraubenbolzen an der Lagerplatte 62 lösbar angeschlossen ist. Die beiden oberen Enden der mit Abstand zueinander angeordneten Tragarme 64, 70 nehmen zwei vertikalverlaufende plattenförmige Halterungen 72 auf, die über einen Gelenkbolzen 76 mit den Tragarmen 64 und 70 schwenkbar verbunden sind. Der Gelenkbolzen 76 ist mittels einer Mutter 78 gesichert. Zwischen den beiden mit Abstand zueinander angeordneten Halterungen 72 und 74 befindet sich eine Distanzhülse 80, die die beiden Lagerplatten auf Abstand hält. Oberhalb des Gelenkbolzens 76 befinden sich zwei Wälzlager 82, die im Ausführungsbeispiel als Kugellager ausgebildet sind. Die Wälzlager 82 weisen einen inneren Lagerring 84 und einen äußeren Lagerring 86 auf. Der innere Lagerring 84 ist auf einen Schraubenbolzen 88 angeordnet, der mittels einer Mutter 90 gesichert ist. Wie aus Fig. 2 hervorgeht können in der Halterung beispielsweise zwei Lagerrollen 82 vorgesehen werden. Es ist jedoch auch möglich, lediglich ein Wälzlager 82 genau unterhalb der Lagerscheibe 38 vorzusehen. Ebenso ist es möglich, neben den beiden Wälzlagern 82 drei oder mehr Wälzlager vorzusehen.

Der Außenumfang der Lagerscheibe 38 stützt sich auf dem Außenring 86 des Wälzlagers 82 ab. Damit Resonanzschwingungen vermieden werden und eine genauere Ausrichtung der Wälzlager 82 mit Bezug auf die Lagerscheibe 38 möglich ist, lassen sich die Halterungen 52 nach Lösen der Schraubenbolzen 54 in ihren Längsschlitzen 56 nach oben oder unten verstellen, so daß keine unnötige Druckkraft auf die Lagerscheibe 38 übertragen wird. Da die Halterungen 72 und 74 schwenkbar auf den Gelenkbolzen 76 angeordnet sind, können sich die beiden Wälzlager 82 so zur Lagerscheibe 38 ausrichten, daß beide gegen den Außenumfang der Lagerscheibe 38 gleichmäßig anliegen. Dadurch wird eine sichere Führung der Lagerscheibe 38 auf dem äußeren Lagerring 86 gewährleistet.

Da die Vorrichtung 50 zur Abstützung der Lagerscheibe 38, die mit dem schrägverlaufenden Schüttlerwellenabschnitt 46 fest verbunden ist, sehr schmal ausgebildet ist, läßt sie sich ohne weiteres zwischen zwei nebeneinanderliegenden Schüttlern 30 eines Hordenschüttlers vorsehen, so daß diese Anordnung ohne weiteres auch bei herkömmlichen Hordenschüttlern vorgesehen werden kann, ohne an den Gesamtabmessungen der einzelnen Schüttler etwas zu verändern oder die Gesamtbreite des Gehäuses des Mähdreschers zu vergrößern.

Die in der Zeichnung dargestellte Schüttlerwelle 2 kann auch im Bereich der Lagerscheibe 38 geteilt sein, so daß lediglich die beiden gegenüberliegenden Enden des schrägverlaufenden Schüttlerwellenabschnittes 46 mit der Oberfläche der Lagerscheibe 38 verschweißt werden müssen. Ebenso istr es möglich, die Lagerscheibe 38 als zwei geteilte Flansche auszubilden, die jeweils mit dem entsprechenden Ende des Schüttlerwellenabschnittes 46 einer geteilten Schüttlerwelle fest verbunden sind. Die beiden Flansche lassen sich dann über Schraubenbolzen miteinander verbinden. Auf diese Weise ist es möglich, die Schüttlerwelle 2 sowie die Lagerscheibe 38 in einem Arbeitsgang herzustellen. Durch die vorteilhafte Ausbildung der Lagerscheibe 38 und der ihr zugeordneten Vorrichtung zum Abstützen der Lagerscheibe, kann der Durchmesser der Schüttlerwellen 2 relativ klein dimensioniert werden, so daß sich kostengünstigere Schüttlerwellen herstellen lassen. Durch Verminderung der Masse der Schüttlerwellen lassen sich Unwuchten und somit Resonanzschwingungen der Schüttlerwelle klein halten.

## Patentansprüche

1. Schüttlerwelle (2) für mehrere nebeneinander angeordnete Schüttler (30) von Mähdreschern, die an mindestens drei Stellen von Lagern (4, 6, 32) drehbar aufgenommen ist, wobei das mittlere Lager (32) im schräg verlaufenden Schüttlerwellenabschnitt (46) angeordnet ist, dadurch gekennzeichnet, daß das mittlere Lager (32) aus einer auf den schräg verlaufenden Schüttlerwellenabschnitt (46) aufschieb- und mit diesem fest verbindbaren, eine längliche Öffnung aufweisenden Lagerscheibe (38) besteht, die auf äußeren Lagerringen von Wälzlagern (82) abstützbar ist, die in vertikaler Richtung verstellbar angeordnet sind.

2. Schüttlerwelle nach Anspruch 1, dadurch gekennzeichnet, daß die Lagerrolle (Wälzlager 82) an einer Halterung (72, 74) angeordnet ist, die vertikal schwenkbar gelagert ist.

3. Schüttlerwelle nach einem oder mehreren der vorherigen Ansprüche, dadurch gekennzeichnet, daß in der halterung (72, 74) zwei oder mehrere Wälzlager (82) angeordnet sind.

4. Schüttlerwelle nach einem oder mehreren der vorherigen Ansprüche, dadurch gekennzeichnet, daß die Halterung (72, 74) über einen Gelenkbolzen (76) an midestens einen Tragarm (64, 70) schwenkbar angeschlossen ist.

5. Schüttlerwelle nach einem oder mehreren der vorherigen Ansprüche, dadurch gekennzeichnet, daß die Halterung (72, 74) oder der Tragarm (64, 70) in vertikaler und horizontaler Ebene verstellbar angeordnet ist.

6. Schüttlerwelle nach einem oder mehreren der vorherigen Ansprüche, dadurch gekennzeichnet, daß die Lagerscheibe (38) koaxial zur geometrischen Mittellinie (36) der Schüttlerwelle (2) angeordnet ist.

## Revendications

1. Arbre de secoueur (2) destiné à plusieurs secoueurs (30) disposés l'un à côté de l'autre et équipant des moissonneuses-batteuses, monté à rotation en au moins trois points des paliers (4, 6, 32), le palier médian (32) étant disposé dans une section d'arbre oblique (46), caractérisé en ce que le palier médian (32) est constitué par un disque ou flasque de portée (38) pouvant être emmanché sur la section d'arbre oblique (46) de l'arbre de secoueur et pouvant être relié rigidement à elle, ce disque ou flasque présentant un orifice de forme oblongue et pouvant prendre appui sur les bagues extérieures de paliers à roulement (82) qui sont montés de façon déplaçable dans le sens vertical.

2. Arbre de secoueur suivant la revendication 1, caractérisé en ce que le galet de portée (palier à roulement 82) est disposé sur un support (72, 74) monté de la façon à pouvoir pivoter verticalement.

3. Arbre de secoueur suivant une ou plusieurs des revendications précédentes, caractérisé en ce que deux ou plusieurs paliers à roulement (82) sont disposés dans le support (72, 74).

4. Arbre de secoueur suivant une ou plusieurs des revendications précédentes, caractérisé en ce que le support (72, 74) est relié de façon pivotante à au moins un bras de support (64, 70) par l'intermédiaire d'un axe d'articulation (76).

5. Arbre de secoueur suivant une ou plusieurs des revendications précédentes, caractérisé en ce que le support (72, 74) ou le bras de support (64, 70) est monté de façon réglable dans le plan vertical et dans le plan horizontal.

6. Arbre de secoueur suivant une ou plusieurs des revendications précédentes, caractérisé en ce que le disque ou flasque de portée (38) est disposé coaxialement à l'axe géométrique (36) de l'arbre de secoueur (2).

## Claims

1. A vibrator shaft (2) for a plurality of juxtaposed-vibrators (30) of combine harvesters, which is rotatably carried by bearings (4, 6, 32) at at least three locations, wherein the middle bearing (32) is arranged in the inclinedly extending portion (46) of the shaft, characterised in that the middle bearing (32) comprises a bearing disc (38) which has an elongate opening and which can be pushed on to and fixedly connected to the inclinedly extending portion (46) of the shaft and which can be supported on outer bearing races of rolling bearings (82) which are arranged displaceably in a vertical direction.

2. A vibrator shaft according to claim 1 characterised in that the bearing roller (rolling bearing 82) is arranged on a holder (72, 74) which is vertically pivotably mounted.

3. A vibrator shaft according to one or more of the preceding claims characterised in that two or more rolling bearings (82) are disposed in the holder (72, 74).

4. A vibrator shaft according to one or more of the preceding claims characterised in that the holder (72, 74) is pivotably connected to at least one carrier arm (64, 70) by way of a pivot pin (76).

5. A vibrator shaft according to one or more of the preceding claims characterised in that the holder (72, 74) or the carrier arm (64, 70) is arranged displaceably in vertical and horizontal planes.

6. A vibrator shaft according to one or more of the preceding claims characterised in that the bearing disc (38) is arranged coaxially with the geometrical centre line (36) of the vibrator shaft (2).

FIG.1

0 069 161

FIG. 2

# FIG. 3